# EUROPÄISCHE PATENTSCHRIFT

(11) **EP 0 573 474 B1**
(45) Veröffentlichungstag und Bekanntmachung des Hinweises auf die Patenterteilung: **30.08.1995**
(21) Anmeldenummer: 92905121.7
(22) Anmeldetag: 19.02.1992
(51) Int. Cl.: B23K 26/02

(54) **VERFAHREN ZUM BEARBEITEN VON WERKSTÜCKEN MIT LASERSTRAHLUNG**
PROCESS FOR MACHINING WORKPIECES USING A LASER BEAM
PROCEDE POUR L'USINAGE DE PIECES AU MOYEN D'UN RAYONNEMENT LASER

(30) Priorität: 26.02.1991 DE 4106007
(43) Veröffentlichungstag der Anmeldung: 15.12.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: MAISCHNER, Dora, D-5100 Aachen (DE); DRENKER, Alexander, J., D-5100 Aachen (DE); ABELS, Peter, D-51100 Alsdorf (DE); BEYER, Eckhard, D-5100 Aachen (DE)
(86) Internationale Anmeldenummer: DE9200115
(87) Internationale Veröffentlichungsnummer: WO9214578

(56) Entgegenhaltungen:
- US-A- 4 817 020
- US-A- 4 960 970
- PATENT ABSTRACTS OF JAPAN vol. 13, no. 55 (M-795)8. Februar 1989 & JP-A-63 260 690 (FUJI ELECTRIC CO.) 27 Oktober 1988
- OPTICS & LASER TECHNOLOGY Bd. 22, Nr. 6, Dezember 1990, GUILDFORD, GB Seiten381 - 386; V.M. WEERASINGHE: 'Acoustic signals from laser back reflections'

## Beschreibung

Die Erfindung bezieht sich auf ein Verfahren zum Bearbeiten von Werkstücken mit Laserstrahlung, bei dem der Bearbeitungsprozeß, insbesondere die Einschweißtiefe oder der Durchschweißgrad überwacht wird, indem aus einem nicht abschirmenden, laserinduzierten Plasma oder Dampf herrührende optische und/oder akustische Signale detektiert werden, die einer Frequenzanalyse unterworfen werden, auf deren Ergebnis eine vorbestimmte Rechenfunktion zur Ermittlung einer Bewertungsgröße angewendet wird.

Aus der DE 38 20 848 A1 ist ein Verfahren zum Fügen von Werkstücken, insbesondere zum Fügen von Blechen mit Laserstrahlung bekannt, das die vorgenannten Merkmale aufweist. Es ermöglicht insbesondere die Erfassung eines Durchschweißens, bei dem sich die Fluktuationen des Plasmaleuchtens und/oder des Plasmageräuschs sprunghaft derart ändern, daß aus dem sprunghaften Verändern der optischen und/oder akustischen Signale auf das Durchschweißen geschlossen werden kann. Dieses bekannte Verfahren ist bezüglich der Signalauswertung jedoch kritisch. Insbesondere ergeben sich nicht zuverlässig auswertbare Schwankungen in Abhängigkeit von der Geometrie und/oder von Prozeßparametern, so daß die Anwendung des bekannten Verfahrens in größeren Anwendungsbereichen schwierig ist, also in ihrer allgemeinen Erstreckung auf die Vielzahl der Bearbeitungsfälle.

Aus der US-A-4 960 970 ist es bekannt, beim Bohren von Werkstücken mit Laserstrahlung akustische Signale einer Frequenzanalyse zu unterwerfen und mit Hilfe eines Schwellen-Algorythmus die zeitliche Länge des Schaltersignals zu bestimmen, welche als Bewertungsgroße herangezogen wird. Auch dieses Verfahren ist abhängig von der Werkstückgeometrie und/oder von Prozeßparametern, was seine Anwendung erschwert.

Außerdem ist es aus SPIE Vol. 801, 1987, S.340 bekannt, die von einem Schneidprozeß ausgehende Strahlung mit einem Strahlungsteiler in den sichtbaren Bereich und in den Infrarotbeteich zu unterteilen. Beide Teile werden separat durch Fotodioden detektiert. Das Verhältnis des Gleichanteils des sichtbaren Signals zu dem des infraroten Signals wird berechnet. Es wächst mit ansteigender Temperatur an der Schneidfront. Mit dem Berechnungsergebnis kann Einfluß auf die Schneidgeschwindigkeit genommen werden. Auch hier ergeben sich die vorbeschriebenen Abhängigkeiten des Verfahrens von der Werkstückgeometrie und/oder von Prozeßparametern, was die allgemeine schnelle Anwendbarkeit des Verfahrens beeinträchtigt.

Der Erfindung liegt demgegenüber die Aufgabe zugrunde, ein Verfahren mit den eingangs genannten Merkmalen so zu verbessern, daß sich allgemeiner gültige Kriterien für Vorgänge beim Bearbeiten und für Bearbeitungsergebnisse ermitteln lassen.

Diese Aufgabe wird dadurch gelöst, daß daß die mittleren Amplituden zweier unterschiedlicher Frequenzbänder der analysierten Frequenzen mit der vorbestimmten Rechenfunktion zur Ermittlung der Bewertungsgröße verwendet werden.

Bei diesem Verfahren werden also die Signale bzw. ihre Mittelwerte nicht selbst herangezogen, um zu einem Überwachungsergebnis zu gelangen, sondern sie werden einer Frequenzanalyse unterworfen. Es wird also nicht ein bestimmter Wert der Leuchtintensität, der Lautstärke oder der Frequenz eines bestimmten Signals verwendet, um beispielsweise den Durchschweißgrad zu beurteilen. Vielmehr werden ein oder mehrere Werte einer Frequenzanalyse unterzogen, so daß sich als Ergebnis dieser Frequenzanalyse ein Band analysierter Frequenzen ergibt, welches ausgewertet wird. Die Auswertung erfolgt dahingehend, daß die mittleren Amplituden zweier unterschiedlicher Frequenzbänder zur Ermittlung einer Bewertungsgröße herangezogen werden. Diese Ermittlung erfolgt mit einer Rechenfunktion, die vorbestimmt werden muß. Die ermittelte Bewertungsgröße wird dann benutzt, um Aussagen über den Bearbeitungsvorgang und/oder über das Bearbeitungsergebnis zu machen. Im Einzelnen kann folgendes detektiert werden:
- eine Änderung der Schweißtiefe
- eine Änderung des Durchschweißgrades
- eine Änderung von Einschweißen und Durchschweißen
- eine Änderung der Fokuslage
- eine Änderung der Schweißgeschwindigkeit
- eine Änderung der Laserleistung
- eine Spritzerbildung
- eine Lochbildung, resultierend aus verstärkten Spritzern
- eine Veränderung des Spaltes beim Fügen von Blechen im I-Stoß sowie im Überlappstoß
- eine geänderte Schutzgasführung, d.h. eine Änderung in der Beeinflusssung des laserinduzierten Plasmas und der Plasmaabsorption (z.B. Plasmaabschirmung)
- eine verstärkte Porenbildung sowie Nahteinfall
Besonders bewährt hat sich, daß als Rechenfunktion die Quotientenbildung vorbestimmt wird.

Um möglichst schnell zu Bewertungsergebnissen zu kommen und diese insbesondere in die Verfahrenssteuerung einfließen lassen zu können, wird so verfahren, daß die Frequenzanalyse mittels einer schnellen Fourier-Transformation durchgeführt wird. Letztere ist ein für digitale Rechenautomaten optimiertes Rechenverfahren zur Verringerung der Rechenzeit. Als wesentlicher Vorteil ergibt sich die Anwendung des Verfahrens für Echtzeitanalysen, z.B. im Bereich von unter einer Sekunde.

Um die Einflußnahme stochastischer Schwankungen der Plasmabildung auf das Bewertungsergebnis auszuschließen, wird so verfahren, daß aus einem zeitlichen Verlauf der Bewertungsgröße Mittelwerte zur Beurteilung des Bearbeitungsprozesses gewonnen werden.

Die Erfindung wird anhand von in der Zeichnung dargestellten Ausführungsbeispielen erläutert. Es zeigt:
- Fig.1: eine schematische Darstellung der Anordnung von Detektoren zur Aufnahme optischer und/oder akustischer Signale aus dem Plasma oder Dampf der Bearbeitungsstelle,
- Fig.2a: ein einem Versuch unterworfenes Werkstück im Querschnitt,
- Fig.2b bis 2d: in einer Frequenzanalyse gewonnene Signalamplituden in Abhängigkeit von der Frequenz,
- Fig.3a: das Werkstück der Fig.2a zwecks Zuordnung zur
- Fig.3b,: die eine Abhängigkeit der Bewertungsgröße für den Durchschweißgrad des in 3a dargestellte Werkstücks zeigt,
- Fig.4a,4b: die zeitliche Abhängigkeit der Vorschubgeschwindigkeit eines Bearbeitungsvorgangs und der Bewertungsgröße für den Durchschweißgrad, und
- Fig.5: ein Blockschaltbild zur Detektion des Durchschweißgrades.

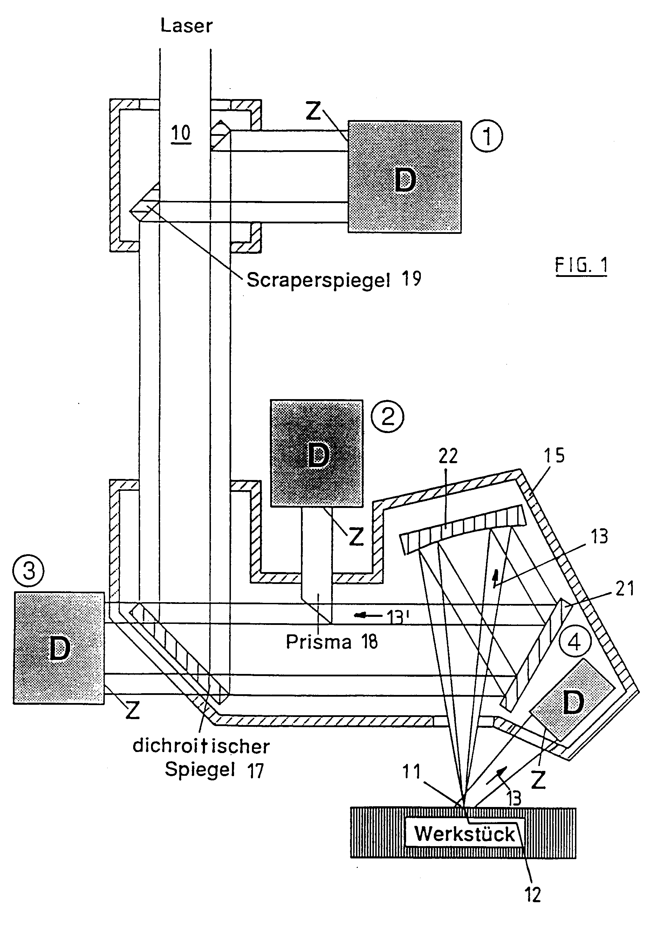

Das in Fig.1 schematisch dargestellte Werkstück besteht beispielsweise aus zwei durch einen Schweißvorgang miteinander zu verbindenden Werkstückteilen. Es kann aber auch ein Werkstück sein, das durch die Bearbeitung geschnitten werden soll. Auch sonstige Bearbeitungen können erfolgen, wie Abtragen oder Ritzen, sofern dabei der Prozeß und/oder das Werkstück beobachtet werden soll.

Der Bearbeitung des Werkstücks dient Laserstrahlung 10, die dem Werkstück von einem Laser durch eine Laserstrahlfokussiereinrichtung 15 zugeführt wird. Dabei wird die Laserstrahlung innerhalb der Laserstrahlfokussiereinrichtung 15 mit Spiegeln 17,21,22 umgelenkt und durch den letztgenannten Spiegel 22 so fokussiert, daß sich auf dem Werkstück eine Bearbeitungsstelle 12 ergibt. Von der Bearbeitungsstelle bzw. von dem darüber oder darin befindlichen Plasma oder Dampf emittiertes Licht 13 gelangt zurück in die Laserstrahlfokussiereinrichtung 15, auf den Fokussierspiegel 22 und die Umlenkspiegel 21,17. Um die Laserstrahlfokussiereinrichtung 15 zur Detektion des emittierten Lichts 13 zu nutzen, greift in den Strahlengang 13' des sich innerhalb der Einrichtung 15 bewegenden emittierten Lichts 13 ein Auskoppelprisma 18 ein, oder der Spiegel 17 ist dikroitisch ausgebildet, er läßt also einen Teil der insgesamt auf ihn fallenden Strahlung durch, nämlich den Anteil des von der Bearbeitungsstelle 12 bzw. deren Umgebungsbereich emittierten Lichts vorbestimmter Wellenlänge. Die an das Prisma 18 bzw. an den Spiegel 17 angeschlossenen Detektoren 2,3 können an geeigneter Stelle angeordnet sein, also auch entfernt von der Laserstrahlfokussiereinrichtung 15, so daß letztere durch die Detektoren 2,3 unbehindert bewegt werden kann. Des weiteren ist in Fig.1 noch ein Scraper-Spiegel 19 im Strahlengang des emittierten bzw. reflektierten Lichts 13 dargestellt, das durch diesen Spiegel 19 einem Detektor 1 zugeleitet wird.

Es ist aber auch möglich, den Bearbeitungsprozeß direkt zu beobachten, indem ein Detektor 4 in die Laserstrahlfokussierungseinrichtung 15 integriert wird. Die Integration erfolgt dabei derart, daß der Anstellwinkel des Detektors 4 zur Senkrechten bzw. zum Laserstrahl 10 möglichst klein ist. Er wird durch die baulichen Gegebenheiten der Laserstrahlfokussiereinrichtung 15 bestimmt.

Alle Detektoren 1 bis 4 können gleichwirkend aufgebaut sein, was durch die Bezeichnung mit dem Buchstaben D angedeutet wird.

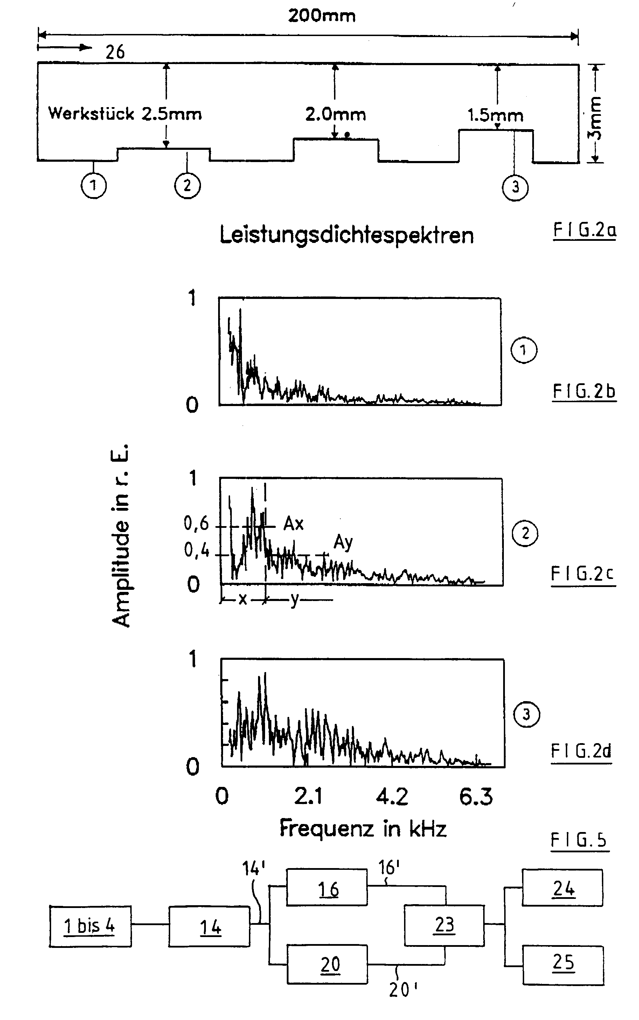

Fig.2a zeigt den Querschnitt eines Werkstücks, bei dem mit einer Vorrichtung gemäß Fig.1 in Pfeilrichtung 26 geschweißt wurde, und zwar unter Ausbildung eines laserinduzierten Plasmas an der Bearbeitungsstelle 12. Einer der Detektoren 1 bis 4 nimmt Signale aus der Plasma auf, beispielsweise optische Signale, nämlich Leuchtstärkeschwankungen, die sich infolge von Fluktuationen des Plasmas ergeben.

Diese Signale gelangen gemäß Fig.5 in den FFT-Analysator 14, der für die Stellen ①, ② und ③ die in den Fig.2b bis 2d dargestellten Amplituden eines Signals bei den angegebenen Frequenzen errechnet bzw. aufzeichnen läßt. Durch Vergleich ist deutlich ersichtlich, daß sich die Frequenzgänge bei unterschiedlich großen Werkstückdicken deutlich unterscheiden. Es ergeben sich also unterschiedliche Signalspektren in Abhängigkeit von der Werkstückdicke und damit von der Einschweißtiefe. Das heißt, die Einschweißtiefe kann grundsätzlich über die Frequenzanalyse der aus dem Plasma gewonnenen Signale bestimmt werden.

Eine besonders deutliche Änderung eines derartigen Frequenzbandes ergibt sich im Falle der Durchschweißung eines Werkstücks, wenn also die Schweißkapillare an der Nahtwurzel des Werkstücks bzw. der Schweißnaht auf der Unterseite des Werkstücks geöffnet wird. Die Änderung ist auch besonders sprunghaft, so daß sie eine zuverlässige Größe zur Beeinflussung des Schweißprozesses sein kann.

Aus den Fig.2b bis 2d ist ersichtlich, daß sich die Signalamplituden für unterschiedliche Frequenzen an den betrachteten Stellen ① bis ③ sehr unterschiedlich verhalten. Hinzu kommt, daß sich die Kurven der Fig.2b bis 2d nicht konstant verhalten, sondern sehr stark von den stochastischen Änderungen in der Dampfkapillare bzw. im Plasma abhängen. Insbesondere haben auch Schmelzbadbewegungen Einfluß auf die detektierten Signale. Es ist daher erforderlich, eine Bewertungsgröße zu gewinnen, deren zeitliche Abhängigkeit ausgewertet bzw. möglichst weitgehend ausgeschaltet werden muß. Infolgedessen werden aus dem in den Fig.2b bis 2d dargestellten Frequenzbereich von 0 bis beispielsweise 6,3 kHz zwei Frequenzbänder bestimmt, die in Fig.2c mit x und mit y bezeichnet sind und beispielsweise den Frequenzbereich von 0 bis 1 kHz und >1 kHz umfassen. Daher ist der FFT-Analysator 14 mit seinem Ausgang 14' an zwei parallele Bandpässe 16,20 angeschlossen. Diese Bandpässe gestatten die Einstellung der Frequenzbänder. Jede andere zweckmäßige Einstellung der Frequenzbänder ist möglich, um diejenige Bewertungsgröße zu ermitteln, die die am besten verwertbaren Ergebnisse liefert.

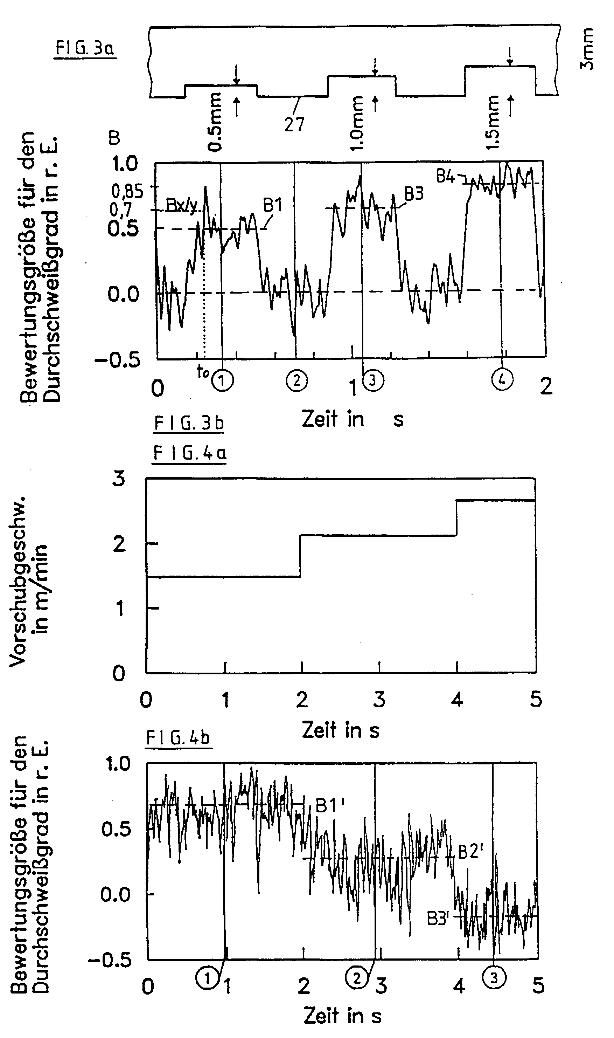

Aus Fig.2c ist ersichtlich, daß die mittlere Amplitude Ax mit 0,6 erheblich größer ist, als die mittlere Amplitude Ay im Frequenzbereich y mit 0,4. Das wird im vorliegenden Fall durch Quotientenbildung zur Ermittlung einer Bewertungsgröße B benutzt, wozu die Bandpässe 16,20 mit ihren Ausgängen 16 ',20' an eine Schaltung 23 zur Quotientenbildung angeschlossen sind. Im vorliegenden Fall wird der Quotient Ay/Ax gebildet. Es ergibt sich ein Verhältnis Bx/y von 0,66 zu einem bestimmten Zeitpunkt t₀. Dieser Einzelwert Bx/y ist in Fig.3b für den Zeitpunkt t₀ eingezeichnet. Dementsprechend ergeben alle Bewertungsgrößen B, die auf diese Weise berechnet werden, den in Fig.3b angegebenen zeitlichen Verlauf der Bewertungsgröße. Insbesondere ergibt sich, daß für eine Stelle ②, also für eine Werkstückdicke von 3mm die Bewertungsgröße Null sein soll. Demgegenüber sind die Bewertungsgrößen B1,B3 und B4 als Mittelwerte der Bewertungsgröße für die in Fig.3a mit den entsprechenden Vertiefungen versehenen Stellen ①, ③ und ④ eindeutig voneinander unterschiedlich, so daß die Bewertungsgröße ein Maß für die Einschweißtiefe sein kann. Die vorgenannten Mittelwerte liegen für ④ bei 0,85, für ③ bei 0,7 und für ① bei 0,5, obwohl die Einschweißtiefe fast bis an die Unterseite des Werkstücks reicht. Wird diese Werkstückunterseite 27 durch das Einschweißen erreicht, öffnet sich also die Kapillare an der Nahtwurzel, so springt die Bewertungsgröße von etwas weniger als 0,5 auf Null. Das ist ein sehr deutliches Indiz für das Durchschweißen, nämlich das Öffnen der Kapillare an der Nahtwurzel.

Mit dem angegebenen Verfahren kann also die Schweißtiefe bestimmt werden, demgemäß der Durchschweißgrad und vor allem der Übergang vom Einschweißen zum Durchschweißen.

Unabhängig von den vorbeschriebenen Verfahren zum Ermitteln der Bewertungsgröße für die Schweißtiefe bzw. für den Durchschweißgrad ist festgestellt worden, daß auch andere Prozeßparameter deutlich detektierbare Einflüsse erkennen lassen, wenn die Bewertungsgröße nach dem vorbeschriebenen Verfahren ermittelt wird. Fig.4a zeigt Änderungen der Vorschubgeschwindigkeit in Abhängigkeit von der Zeit. Diese Änderungen wurden willkürlich gewählt. Fig.4b zeigt die Abhängigkeit der Bewertungsgröße von der Zeit für die Vorschubgeschwindigkeiten der Bereiche ①, ② und ③. Es ist ersichtlich, daß die Bewertungsgrößen B1', B2' und B3' deutlich unterschiedlich voneinander sind. Daher ist erkennbar, daß der Durchschweißgrad bzw. die Bewertungsgröße für den Durchschweißgrad dazu herangezogen werden kann, die Vorschubgeschwindigkeit zu ändern, um den Durchschweißgrad konstant zu halten.

Zusammenfassend ergibt sich, daß es durch den Vergleich zweckmäßig bestimmter Frequenzbänder der Signale möglich ist, nämlich beispielsweise durch Quotientenbildung, Änderungen im Schmelzbad und in der Geometrie der Dampkapillare zu erfassen und Bewertungsgrößen zu ermitteln, die eine Beobachtung des Prozesses und/oder eine Einflußnahme auf den Prozeß ermöglichen. Infolgedessen sind in Fig.5 an die Schaltung 23 zur Quotientenbildung eine Anzeigeeinrichtung 24 und eine Steuer- oder Regeleinrichtung 25 angeschlossen, wobei mit letzterer eine on-line-Bearbeitung möglich ist, wenn die Mittelwerte B1,B3, B4 bzw. B1',B2',B3' gemäß Fig.3b,4b der Bewertungsgröße B herangezogen werden.

## Patentansprüche

1. Verfahren zum Bearbeiten von Werkstücken mit Laserstrahlung, bei dem der Bearbeitungsprozeß, insbesondere die Einschweißtiefe oder der Durchschweißgrad überwacht wird, indem aus einem nicht abschirmenden, laserinduzierten Plasma oder Dampf herrührende optische und/oder akustische Signale detektiert werden, die einer Frequenzanalyse unterworfen werden, auf deren Ergebnis eine vorbestimmte Rechenfunktion zur Ermittlung einer Bewertungsgröße (B) angewendet wird, **dadurch gekennzeichnet**, daß die mittleren Amplituden (Ax,Ay) zweier unterschiedlicher Frequenzbänder (x,y) der analysierten Frequenzen mit der vorbestimmten Rechenfunktion zur Ermittlung der Bewertungsgröße (B) verwendet werden.

2. Verfahren nach Anspruch 1, **dadurch gekennzeichnet**, daß als Rechenfunktion die Quotientenbildung vorbestimmt wird.

3. Verfahren nach Anspruch 1 oder 2, **dadurch gekennzeichnet**, daß die Frequenzanalyse mittels einer schnellen Fourier-Transformation durchgeführt wird.

4. Verfahren nach einem oder mehreren der Ansprüche 1 bis 3, **dadurch gekennzeichnet**, daß aus einem zeitlichen Verlauf der Bewertungsgröße (B) Mittelwerte (B1,B3,B4) zur Beurteilung des Bearbeitungsprozesses gewonnen werden.

## Claims

1. Method for machining workpieces with laser radiation, in which the machining process, particularly the welding in depth or the through-welding degree is monitored, in that optical and/or acoustical signals emanating from a non-shielding, laser-induced plasma are detected and undergo frequency analysis and to the result thereof is applied a predetermined arithmetic function for determining a weighting variable (B), characterized in that the average amplitudes (Ax, Ay) of two different frequencies band (x, y) of the analyzed frequencies are used with the predetermined arithmetic function for determining the weighting quantity (B).

2. Method according to claim 1, characterized in that the quotient formation is predetermined as an arithmetic function.

3. Method according to claim 1 or 2, characterized in that frequency analysis is performed by means of a fast Fourier transformation.

4. Method according to one or more of the claims 1 to 3, characterized in that means values (B1, B3, B4) for evaluating the machining process are obtained from a time variation of the weighting quantity (B).

## Revendications

1. Procédé à usiner des pièces au moyen d'un rayonnement laser, dans lequel le processus d'usinage, en particulier la profondeur de pénétration en soudage ou le degré de pénétration de la soudure, est surveillé en détectant les signaux optiques et/ou acoustiques dérivés d'un plasma ou d'une vapeur induit par laser, qui ne produisent pas un effet de blindage, lesquels signaux sont soumis à une analyse de fréquences dont le résultat est traité moyennant une fonction arithmétique déterminée à déterminer une grandeur d'évaluation, **caractérisé en** ce que les amplitudes moyennes (Ax, Ay) de deux bandes de fréquences différentes (x, y) des fréquences analysées sont utilisées en combinaison avec ladite fonction arithmétique déterminée à déterminer ladite grandeur d'évaluation (B).

2. Procédé selon la Revendication 1, **caractérisé en** ce qu'on détermine la formation d'un quotient comme ladite fonction arithmétique.

3. Procédé selon la Revendication 1 ou 2, **caractérisé en** ce que ladite analyse de fréquence est réalisée moyennant une transformation de Fourier rapide.

4. Procédé selon une quelconque des Revendications 1 à 3, **caractérisé en** ce que des valeurs moyennes (B1, B3, B4) sont dérivées de la loi de ladite grandeur d'évaluation (B), pour l'appréciation du processus d'usinage.
